# EUROPEAN PATENT SPECIFICATION

(11) **EP 2 088 388 B1**
(45) Date of publication and mention of the grant of the patent: **02.10.2019**
(21) Application number: 08151132.1
(22) Date of filing: 06.02.2008
(51) Int. Cl.: F25B 1/10, F25B 30/02, F25B 31/00, F24D 3/18, F25B 13/00

(54) **Heat pump system**
Wärmepumpensystem
Système de pompe à chaleur

(43) Date of publication of application: 12.08.2009
(73) Proprietor: Stiebel Eltron GmbH & Co. KG, 37603 Holzminden (DE); EDF S.A., 75008 Paris (FR)
(72) Inventor: Ritz, Jean-Benoit, 77250, Moret sur Loing (FR); Horber, Bernard, 77430, Chamgagne sur Seine (FR)
(74) Representative: Eisenführ Speiser

(56) References cited:
- EP-A2- 1 555 493
- WO-A-2007/063798
- WO-A-2007/090861
- DE-A1-102005 052 763
- US-A- 4 787 211
- US-A- 5 522 233
- US-A- 5 927 088
- US-A1- 2006 266 074

## Description

The present application relates to a heat pump system.

Heat pump systems are commonly known and are used to provide for a heating/cooling of a building and for providing warm water.

US 5,927,088 relates to a heat pump system with a primary and booster compressor. The primary compressor is operated if the heat pump system is activated. However, if the primary compressor is not able any more to meet the demands of the heat pump system, the booster compressor is activated. The booster compressor is implemented as a variable speed compressor, wherein its speed is controlled between the minimum and the maximum speed. The first and second compressor are connected in series. A bypass and a check valve are arranged in parallel to one of the compressors. An electrically controlled expansion valve is coupled via a line to an inter-stage point between the first and second compressor. The two compressors share a common oil sump.

WO 2007/090861 relates to a heat pump system with a first and second compressor which are coupled in series. Behind one of the compressors, an oil-separator is provided. WO 2007/063798 A relates to an air conditioner using two compressors in series, each compressor having behind it an oil separator. US 2006/266074 A1 discloses a heat pump with a first and a second compressor and an economizer. US 5 522 233 A relates to a refrigeration system having several compressors in series with oil separators behind them and using an economizer.

It is an object of the invention to provide an improved heat pump system.

This object is achieved by a heat pump system according to claim 1.

Therefore, heat pump system is provided comprising a first and a second hermetic compressor, a condenser, a first electronically controlled expansion valve, and an evaporator. The first compressor and the second compressor are connected in series via a first conduit segment, such that the compression is a two-stage compression when the first and second compressor are both operated. A first oil separator is arranged behind the first hermetic compressor and is connected with the first hermetic compressor via a first oil conduit for feeding back oil from the first oil separator to the first hermetic compressor. A second oil separator is arranged behind the second hermetic compressor and is connected with the second hermetic compressor via an second oil conduit for feeding back oil form the second oil separator to the second hermetic compressor. An control unit is coupled to the first expansion valve for electrically controlling the valve. The first expansion valve is arranged in flow direction in front of the evaporator. A second expansion valve is located within a second conduit segment and is connected to the first conduit segment. The first and/or second hermetic compressor is a variable speed compressor. At least one of the first and second compressors is operable independently. The compressor which is not operated is by-passed via a bypass conduit.

According to an aspect of the invention the first and/or second compressor is connected to the control unit. The control unit controls the speed of the first and second compressor in dependence on a performance demand. Accordingly, the heat pump system can be operated efficiently.

According to a further aspect of the invention, the first and second compressor are arranged such that their nominal oil levels are on the same geodetical height at least when the heat pump system is not operated.

According to a further aspect of the invention the valve arranged in the conduit segment is close when the heat pump system is operated and is opened when the system is not operated in order to enable the oil levels in the first and second oil container to balance.

Further aspects of the invention are defined in the dependent claims.

An embodiment of the present invention will now be described more detail with reference to the drawing.

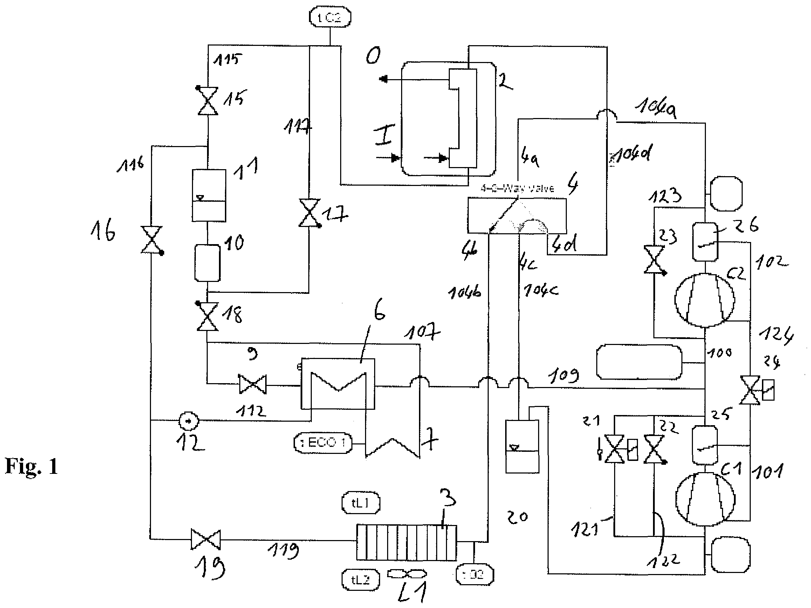

- Fig. 1: shows a schematic representation of a heat pump system according to the invention.

Fig. 1 shows a schematic representation of a heat pump system according to an embodiment. The heat pump according to the first embodiment can be implemented as an air source heat pump. The heat pump system comprises a compressor unit with a first and second compressor C1, C2 coupled in series, a condenser 2, an electronically controlled expansion valve 19, an evaporator 3, and a 4-2-way valve 4. The condenser 2 comprises an input I and an output O for heating or hot water. The condenser 2 is coupled to a valve 15 in a conduit segment 115 of the closed loop for the refrigerant fluid and a valve 17 in a conduit segment 117. The valve 15 is coupled optionally to a liquid receiver 11 and a filter drier 10 in a series arrangement as well as to a valve 16 in a conduit segment 116. The valve 17 is coupled to the output of the filter drier and to valve 18, i.e. the conduit segments 115 and 117 are coupled. The valve 18 is coupled to an electronically controlled expansion valve 9 via a conduit segment 109 and to a heating loop of a condensate pan 17 via conduit segment 107. The other end of the condensate pan 7 is coupled to one end of an economizer 6. The other end of the economizer is coupled to an optional sightglass 12 in the conduit segment 112 which is coupled in turn to the valve 16. The conduit segment 109 with the (optionally electronically controlled) expansion valve 9 passes through the economizer 6 and is coupled to a conduit segment 100 coupling the first and second compressor C1, C2.

The valve 16 and its conduit segment 116 is also coupled to a conduit segment 119 with the electronically controlled expansion valve 19 which is coupled to the evaporator 3 having a fan L1. The evaporator 3 is coupled via a conduit segment 104b to a second connection 4b of the 4-2-way valve 4. A first connection 4a of the 4-2 way valve 4 is coupled via a conduit segment 104a to the compressor stage C1, C2. A third connection 4c is coupled via a conduit segment 104c to an optional separator 20 which is coupled to the compressor stage C1, C2. A fourth connection 4d is coupled via a conduit segment to the condenser 2.

The compressor stage with the first and second compressor C1, C2 will now be described in more detail. A first oil separator 25 is associated to the first compressor C1 and a second oil separator 26 is associated to the second compressor C2. The first and the second oil separator 25, 26 can be arranged behind the first and second compressor C1, C2, respectively. The two compressors C1, C2 are coupled via a conduit segment 100. Two conduit segments 122, 121 are arranged in parallel to the first compressor C1. In the conduit segments 122 a valve 22 is provided and in the other conduit segment 121 an pressure equalization valve 21 is provided. The conduit 122 with the valve 22 can be used as a bypass conduit, if the first compressor C1 is not operated. A further conduit segment 123 is provided with a valve 23 in parallel to the second compressor C2 and the second oil separator 26. The conduit 123 with the valve 23 can be used as a bypass conduit, if the second compressor C2 is not operated. The first and second oil separator 25 , 26 are coupled via a conduit 124 with a bi-flow valve 24 for an oil equalization.

A feed back conduit segment 101 is provided for coupling the first compressor C1 and the first oil separator 25 such that oil from the first oil separator 25 can be feed back to the first compressor C1. A feed back conduit segment 102 is provided for coupling the second compressor C2 and the second oil separator 25 such that oil from the second oil separator 26 can be feed back to the second compressor C2.

The first and second compressors C1, C2 can each be implemented as a hermetic compressor as well as a variable speed compressor. Each of the first and second compressor can be operated independently while the other compressor can be bypassed via the conduit segments 122 and 123, respectively, if the compressors are not operated. The valves 22 and 23 can be implemented as check valves.

The first and/or second compressor C1, C2 can be coupled to the control unit and can be controlled independently by controlling the speed thereof. The speed of the compressors is controlled according to performance demands of the heat pump system.

The first and second compressor C1, C2 are arranged such that the nominal levels of the oil in the first and second compressors C1, C2 are on the same geodetical height at least if the heat pump system is not operated. The valve 24 in the conduit segment 124 is closed during normal operation and is open when the heat pump is not operated to enable an equalization of the oil levels in the first and second compressors C1, C2. The valve 24 can be implemented as a magnetic valve, as a motor valve or as an electronically controlled valve.

The conduit segment 109 is used to inject refrigerant into the conduit segment 100 between the first and second compressor C1, C2.

The evaporation temperature can be between +10°C and -30°C. The flow temperature can be between 25°C and 80°C. The first and second compressor C1, C2 can be operated at a frequency of between 35 and 120Hz. If the first and second compressor C1, C2 are both operated (two-stage compression), the speed of both compressors C1, C2 are controlled to achieve an optimal pressure of at least one of the first and second compressor C1, C2 which may correspond to pm = (p0*pC) 0.5 +/- 15% (speed control).

If only one of the first and second compressor C1, C2 is operated, this compressor will be variably speed controlled to enable an adaptation of the heating performance on the heating load of the heat pump. If the pressure relation pc/po exceeds a value of 6 to 12 the first and second compressor will be both operated to provide a two-stage compression irrespective of the ambient outdoor temperature.

The decision to operate one or two of the compressors will depend on the ambient outdoor temperature dependent heating load, the required flow temperature, and the heating performance of the compressors for a given ambient outdoor temperature and a flow temperature.

The electronically controlled expansion valve is controlled according to a characteristic curve in dependence of the temperature of the heat source, the temperature of the heating water, the speed dependence heating/cooling performance of the first and/or second compressor. The results are then passed to a PI or PID controller.

## Claims

1. Heat pump system, comprising
a first and a second hermetic compressor (C1, C2), a condenser (2), a first electronically controlled expansion valve (19), and an evaporator (3),
wherein the first compressor and the second compressor (C1, C2) are connected in series via a first conduit segment (100), such that the compression is a two-stage compression when the first and second compressor (C1, C2) are both operated,
a first oil separator (25) arranged behind the first hermetic compressor (C1) and being connected with the first hermetic compressor (C1) via a first oil conduit (101) for feeding back oil from the first oil separator (25) to the first hermetic compressor (C1),
a second oil separator (26) arranged behind the second hermetic compressor (C2) and being connected with the second hermetic compressor (C2) via an second oil conduit (102) for feeding back oil from the second oil separator (26) to the second hermetic compressor (C2),
wherein the first expansion valve (19) is arranged in flow direction in front of the evaporator;
a control unit coupled to the first expansion valve (19) for electrically controlling the first expansion valve (19),
a second expansion valve (9) being arranged within a second conduit segment (109) which is connected to the first conduit segment (100);
wherein the first and/or second hermetic compressor (C1, C2) is a variable speed compressor,
wherein at least one of the first and second compressors (C1, C2) is operable independently; and wherein the compressor of the first and second compresssor (C1, C2) which is not operated is by-passed via a bypass conduit (122, 123), the heat pump further comprising a third conduit segment (115) coupled to the condenser (2) and comprising a valve (15),
the heat pump being **characterised by**
a fourth conduit segment (116) connected with its first end to the third conduit segment (115) and with its second end to the first expansion valve (19),
a fifth conduit segment (117) coupled to the condenser (2) and comprising a valve (17),
wherein the valve (15) of the third conduit segment (115) is coupled optionally to a liquid receiver (11) and a filter drier (10) in a series arrangement as well as to a valve (16) in the fourth conduit segment (116), wherein the valve (17) of the fifth conduit segment (117) is coupled to the output of the filter drier (10) and to a valve (18) such that the third conduit segment (115) and the fifth conduit segment (117) are coupled,
said valve (18) being coupled to the second expansion valve (9) via second conduit segment (109) and to a heating loop of a condensate pan (7) via a sixth conduit segment (107),
wherein the other end of the condensate pan (7) is coupled to one end of an economizer (6), and the other end of the economizer (6) is coupled in turn to the valve (16) of the fourth conduit segment (116),
wherein the first and second compressor (C1, C2) are arranged such that nominal oil levels of the first and second compressor (C1, C2) are on same geodetical height at least when the heat pump system is not operated,
wherein the first and second oil separators (25, 26) are connected to each other via a conduit segment (124), which comprises a valve (24),
wherein the valve (24) is closed when the heat pump system is operated, and
wherein the valve (24) is opened when the system is not operated for an oil equalization,
the economizer (6) being arranged directly between the second expansion valve (9) and the first conduit segment (100),
wherein a steam injection is performed via the economizer (6) into the first conduit segment (100) between the first and second compressor (C1, C2),
wherein the refrigerant of the steam injection is diverted from the sub-cooled refrigerant in front of the evaporator (3) in flow direction and is evaporated in counterflow with respect to a major part of the refrigerant within the economizer (6),
wherein the first and/or second compressor (C1, C2) is connected with the control unit being adapted to control the speed of the first and/or second compressor (C1, C2) in dependence on a performance demand.

2. Heat pump system according to claim 1,
wherein the valve (24) is a magnetic valve or a motor valve, being connected to the control unit.

3. Heat pump system according to any one of the claims 1 to 2,
wherein the heat pump is an air source heat pump.

4. Heat pump system according to any one of the claims 1 to 3,
wherein the evaporation temperature can be between +10°C and -30°C.

5. Heat pump system according to any one of the claims 1 to 4,
wherein the first and second compressor (C1, C2) can be operated at a frequency of between 35 and 120Hz.

6. Heat pump system according to any one of the claims 1 to 5,
wherein, if the first and second compressor (C1, C2) are both operated, the speed of both compressors (C1, C2) are controlled to achieve an optimal pressure of at least one of the first and second compressor (C1, C2).

7. Method for operating a heat pump system having a first and second hermetic compressor (C1, C2), a condenser (2), a first electronically controlled expansion valve (19) and an evaporator (3), the first expansion valve (19) being
arranged in flow direction in front of the evaporator (3),
wherein the first and second compressor (C1, C2) are connected in series via a first conduit segment (100) to implement a two-stage compression when the first and second compressor (C1, C2) are both operated, a first oil separator (25) arranged behind the first hermetic compressor (C1) and being connected with the first hermetic compressor (C1) via a first oil conductor (101) for feeding back oil from the first oil separator (25) to the first hermetic compressor (C1), a second oil separator (26) arranged behind the second hermetic compressor (C2) and being connected with the second hermetic compressor (C2) via a second oil conduit (102) for feeding back oil from the second oil separator (26) to the second hermetic compressor (C2), a control unit coupled to the first expansion valve (19) for electrically controlling the first expansion valve (19), a second expansion valve (9) being arranged within a second conduit segment (109) which is connected to the first conduit segment (100); a third conduit segment (115) coupled to the condenser (2) and comprising a valve (15), a fourth conduit segment (116) connected with its first end to the third conduit segment (115) and with its second end to the first expansion valve (19), a fifth conduit segment (117) coupled to the condenser (2) and comprising a valve (17), wherein the valve (15) of the third conduit segment (115) is coupled optionally to a liquid receiver (11) and a filter drier (10) in a series arrangement as well as to a valve (16) in the fourth conduit segment (116), wherein the valve (17) of the fifth conduit segment (117) is coupled to the output of the filter drier (10) and to a valve (18) such that the third conduit segment (115) and the fifth conduit segment (117) are coupled, said valve (18) being coupled to the second expansion valve (9) via second conduit segment (109) and to a heating loop of a condensate pan (7) via a sixth conduit segment (107), wherein the other end of the condensate pan (7) is coupled to one end of an economizer (6), and the other end of the economizer (6) is coupled in turn to the valve (16) of the fourth conduit segment (116), the economizer (6) being arranged directly between the second expansion valve (9) and the first conduit segment (100),
wherein the first and/or second hermetic compressor (C1, C2) is a variable speed compressor,
wherein wherein the first and second compressors (C1, C2) are provided with bypass conduits (122, 123) and are connected with the control unit,
wherein the first and second compressor (C1, C2) are arranged such that nominal oil levels of the first and second compressor (C1, C2) are on same geodetical height at least when the heat pump system is not operated,
wherein the first and second oil separators (25, 26) are connected via a conduit segment (124), which comprises a valve (24), said method comprising the steps:
controlling the first expansion valve (19),
independently operating the first and second compressor (C1, C2),
bypassing the compressor which is not operated,
closing the valve (24) when the heat pump system is operated, and
opening the valve (24) when the system is not operated for an oil separation,
wherein a steam injection is performed via the economizer (6) into the first conduit segment (100) between the first and second compressor (C1, C2),
wherein the refrigerant of the steam injection is diverted from the sub-cooled refrigerant in front of the evaporator (3) in flow direction and is evaporated in counterflow with respect to a major part of the refrigerant within the economizer (6),
controlling the speed of the of the first and/or second compressor (C1, C2) in dependence on a performance demand.

8. Method for operating a heat pump system according to any one of the claims 1 to 6, comprising the step of:
operating the first and/or the second hermetic compressor at a speed frequency of 35 to 120 Hz, when at an evaporation temperature of between +10 °C and -30 °C.

## Patentansprüche

1. Wärmepumpensystem, umfassend
einen ersten und einen zweiten luftdichten Kompressor (C1, C2), einen Kondensator (2), ein erstes elektronisch gesteuertes Expansionsventil (19) und einen Verdampfer (3),
wobei der erste Kompressor und der zweite Kompressor (C1, C2) über ein erstes Leitungssegment (100) in Serie verbunden sind, sodass die Kompression eine zweistufige Kompression ist, wenn der erste und der zweite Kompressor (C1, C2) beide betrieben werden,
einen ersten Ölabscheider (25), der hinter dem ersten luftdichten Kompressor (C1) angeordnet ist und mit dem ersten luftdichten Kompressor (C1) über eine erste Ölleitung (101) zur Rückführung von Öl vom ersten Ölabscheider (25) zum ersten luftdichten Kompressor (C1) verbunden ist,
einen zweiten Ölabscheider (26), der hinter dem zweiten luftdichten Kompressor (C2) angeordnet ist und mit dem zweiten luftdichten Kompressor (C2) über eine zweite Ölleitung (102) zur Rückführung von Öl vom zweiten Ölabscheider (26) zum zweiten luftdichten Kompressor (C2) verbunden ist,
wobei das erste Expansionsventil (19) in Flussrichtung vor dem Verdampfer angeordnet ist;
eine Steuereinheit, die mit dem ersten Expansionsventil (19) zum elektrischen Steuern des ersten Expansionsventils (19) verbunden ist,
ein zweites Expansionsventil (9), das in einem zweiten Leitungssegment (109) angeordnet ist, das mit dem ersten Leitungssegment (100) verbunden ist;
wobei der erste und/oder zweite luftdichte Kompressor (C1, C2) ein geschwindigkeitsvariabler Kompressor ist,
wobei mindestens einer von dem ersten und zweiten Kompressor (C1, C2) unabhängig betreibbar ist; und wobei der Kompressor von dem ersten und zweiten Kompressor (C1, C2), der nicht betrieben wird, über eine Umgehungsleitung (122, 123) umgangen wird, wobei die Wärmepumpe ferner ein drittes Leitungssegment (115) aufweist, das mit dem Kondensator (2) verbunden ist und ein Ventil (15) aufweist,
wobei die Wärmepumpe **gekennzeichnet ist durch**
ein viertes Leitungssegment (116), das mit seinem ersten Ende mit dem dritten Leitungssegment (115) verbunden ist und mit seinem zweiten Ende mit dem ersten Expansionsventil (19) verbunden ist,
ein fünftes Leitungssegment (117), das mit dem Kondensator (2) verbunden ist und ein Ventil (17) aufweist, wobei das Ventil (15) des dritten Leitungssegments (115) optional mit einem Flüssigkeitssammler (11) und einem Filtertrockner (10) in serieller Anordnung sowie mit einem Ventil (16) in dem vierten Leitungssegment (116) verbunden ist, wobei das Ventil (17) des fünften Leitungssegments (117) mit dem Ausgang des Filtertrockners (10) und einem Ventil (18) verbunden ist, sodass das dritte Leitungssegment (115) und das fünfte Leitungssegment (117) verbunden sind, wobei das Ventil (18) mit dem zweiten Expansionsventil (9) über das zweite Leitungssegment (109) und mit einem Heizkreislauf einer Kondensatwanne (7) über ein sechstes Leitungssegment (107) verbunden ist,
wobei das andere Ende der Kondensatwanne (7) mit einem Ende eines Economisers (6) verbunden ist und das andere Ende des Economisers (6) wiederum mit dem Ventil (16) des vierten Leitungssegments (116) verbunden ist,
wobei der erste und zweite Kompressor (C1, C2) so angeordnet sind, dass die nominalen Ölstände des ersten und zweiten Kompressors (C1, C2) sich auf gleicher geodätischer Höhe, zumindest wenn das Pumpensystem nicht betrieben wird, befinden,
wobei der erste und zweite Ölabscheider (25, 26) miteinander über ein Leitungssegment (124) verbunden sind, das ein Ventil (24) aufweist,
wobei das Ventil (24) geschlossen ist, wenn das Wärmepumpensystem nicht betrieben wird und
wobei das Ventil (24) geöffnet ist, wenn das System nicht für einen Ölausgleich betrieben wird,
wobei der Economiser (6) direkt zwischen dem zweiten Expansionsventil (9) und dem ersten Leitungssegment (100) angeordnet ist,
wobei eine Dampfinjektion über den Economiser (6) in das erste Leitungssegment (100) zwischen dem ersten und zweiten Kompressor (C1, C2) durchgeführt wird,
wobei das Kältemittel der Dampfinjektion von dem unterkühlten Kältemittel vor dem Verdampfer (3) in Flussrichtung abgeleitet wird und im Gegenstrom bezogen auf einen Hauptteil des Kältemittels im Economiser (6) verdampft wird,
wobei der erste und/oder zweite Kompressor (C1, C2) mit der Steuereinheit verbunden ist, eingerichtet zum Steuern der Geschwindigkeit des ersten und/oder zweiten Kompressors (C1, C2) in Abhängigkeit von einer Leistungsanforderung.

2. Wärmepumpensystem nach Anspruch 1,
wobei das Ventil (24) ein Magnetventil oder ein Motorventil ist, das mit der Steuereinheit verbunden ist.

3. Wärmepumpensystem nach einem der Ansprüche 1 bis 2,
wobei die Wärmepumpe eine Luftquellenwärmepumpe ist.

4. Wärmepumpensystem nach einem der Ansprüche 1 bis 3,
wobei die Verdampfungstemperatur zwischen +10 °C und -30 °C liegen kann.

5. Wärmepumpensystem nach einem der Ansprüche 1 bis 4,
wobei der erste und zweite Kompressor (C1, C2) mit einer Frequenz zwischen 35 und 120 Hz betrieben werden kann.

6. Wärmepumpensystem nach einem der Ansprüche 1 bis 5,
wobei, wenn der erste und zweite Kompressor (C1, C2) beide betrieben werden, die Geschwindigkeit beider Kompressoren (C1, C2) gesteuert wird, um einen optimalen Druck zumindest eines von dem ersten und zweiten Kompressor (C1, C2) zu erhalten.

7. Verfahren zum Betreiben eines Wärmepumpensystems, das einen ersten und zweiten luftdichten Kompressor (C1, C2), einen Kondensator (2), ein erstes elektronisch gesteuertes Expansionsventil (19) und einen Verdampfer (3) aufweist, wobei das erste Expansionsventil (19) in Flussrichtung vor dem Verdampfer (3) angeordnet ist,
wobei der erste und zweite Kompressor (C1, C2) in Serie über ein erstes Leitungssegment (100) verbunden sind, um eine zweistufige Kompression zu implementieren, wenn der erste und zweite Kompressor (C1, C2) beide betrieben werden, einen ersten Ölabscheider (25), der hinter dem ersten luftdichten Kompressor (C1) angeordnet ist und mit dem ersten luftdichten Kompressor (C1) über eine erste Ölleitung (101) zur Rückführung von Öl vom ersten Ölabscheider (25) zum ersten luftdichten Kompressor (C1) verbunden ist, einen zweiten Ölabscheider (26), der hinter dem zweiten luftdichten Kompressor (C2) angeordnet ist und mit dem zweiten luftdichten Kompressor (C2) über eine zweite Ölleitung (102) zur Rückführung von Öl von dem zweiten Ölabscheider (26) zum zweiten luftdichten Kompressor (C2) verbunden ist, eine Steuereinheit, die mit dem ersten Expansionsventil (19) zum elektronischen Steuern des ersten Expansionsventils (19) verbunden ist, ein zweites Expansionsventil (9), das in einem zweiten Leitungssegment (109), das mit dem ersten Leitungssegment (100) verbunden ist, angeordnet ist; ein drittes Leitungssegment (115), das mit dem Kondensator (2) verbunden ist und ein Ventil (15) aufweist,
ein viertes Leitungssegment (116) das mit seinem ersten Ende mit dem dritten Leitungssegment (115) und mit seinem zweiten Ende mit dem ersten Expansionsventil (19) verbunden ist, ein fünftes Leitungssegment (117), das mit dem Kondensator (2) verbunden ist und ein Ventil (17) aufweist, wobei das Ventil (15) des dritten Leitungssegments (115) optional mit einem Flüssigkeitssammler (11) und einem Filtertrockner (10) in einer seriellen Anordnung sowie mit einem Ventil (16) in dem vierten Leitungssegment (116) verbunden ist, wobei das Ventil (17) des fünften Leitungssegments (117) mit dem Ausgang des Filtertrockners (10) und einem Ventil (18) verbunden ist, sodass das dritte Leitungssegment (115) und das fünfte Leitungssegment (117) verbunden sind, wobei das Ventil (18) mit dem zweiten Expansionsventil (9) über das zweite Leitungssegment (109) und mit einem Heizkreislauf einer Kondensatwanne (7) über ein sechstes Leitungssegment (107) verbunden ist, wobei das andere Ende der Kondensatwanne (7) mit einem Ende eines Economisers (6) verbunden ist und das andere Ende des Economisers (6) wiederum mit dem Ventil (16) des vierten Leitungssegments (116) verbunden ist, wobei der Economiser (6) direkt zwischen dem zweiten Expansionsventil und dem ersten Leitungssegment (100) angeordnet ist,
wobei der erste und/oder zweite luftdichte Kompressor (C1, C2) ein geschwindigkeitsvariabler Kompressor ist,
wobei der erste und zweite Kompressor (C1, C2) mit Umgehungsleitungen (122, 123) bereitgestellt und mit der Steuereinheit verbunden sind,
wobei der erste und zweite Kompressor (C1, C2) so angeordnet sind, dass nominale Ölstände des ersten und zweiten Kompressors auf der gleichen geodätischen Höhe, zumindest wenn das Wärmepumpensystem nicht betrieben wird, liegen,
wobei der erste und zweite Ölabscheider (25, 26) über ein Leitungssegment (124) verbunden sind, das ein Ventil (24) aufweist, wobei das Verfahren die Schritte umfasst:
Steuern des ersten Expansionsventils (19),
unabhängiges Betreiben des ersten und zweiten Kompressors (C1, C2),
Umgehen des Kompressors, der nicht betrieben wird,
Schließen des Ventils (24), wenn das Wärmepumpensystem betrieben wird, und
Öffnen des Ventils (24), wenn das System nicht für eine Ölseparierung betrieben wird,
wobei eine Dampfinjektion über den Economiser (6) in das erste Leitungssegment (100) zwischen dem ersten und zweiten Kompressor (C1, C2) durchgeführt wird,
wobei das Kältemittel der Dampfinjektion von dem unterkühlten Kältemittel vor dem Verdampfer (3) in Flussrichtung abgeleitet wird und im Gegenstrom bezogen auf einen Hauptteil des Kältemittels im Economiser (6) verdampft wird,
Steuern der Geschwindigkeit des ersten und/oder zweiten Kompressors (C1, C2) in Abhängigkeit von einer Leistungsanforderung.

8. Verfahren zum Betreiben eines Wärmepumpensystems nach einem der Ansprüche 1 bis 6, umfassend die Schritte:
Betreiben des ersten und/oder zweiten luftdichten Kompressors mit einer Geschwindigkeitsfrequenz von 35 bis 120 Hz bei einer Verdampfungstemperatur zwischen +10 °C und -30 °C.

## Revendications

1. Système de pompe à chaleur, comprenant
un premier et un second compresseur hermétique (C1, C2), un condenseur (2), une première vanne de détente à commande électronique (19) et un évaporateur (3),
dans lequel le premier compresseur et le second compresseur (C1, C2) sont connectés en série via un premier segment de conduit (100), de telle sorte que la compression est une compression à deux étages quand les premier et second compresseurs (C1, C2) fonctionnent tous les deux,
un premier séparateur d'huile (25) agencé derrière le premier compresseur hermétique (C1) et étant connecté au premier compresseur hermétique (C1) via un premier conduit d'huile (101) pour ramener l'huile du premier séparateur d'huile (25) vers le premier compresseur hermétique (C1),
un second séparateur d'huile (26) agencé derrière le second compresseur hermétique (C2) et étant connecté au second compresseur hermétique (C2) via un second conduit d'huile (102) pour ramener l'huile du second séparateur d'huile (26) vers le second compresseur hermétique (C2),
dans lequel la première vanne de détente (19) est agencée dans une direction d'écoulement devant l'évaporateur ;
une unité de commande couplée à la première vanne de détente (19) pour commander électriquement la première vanne de détente (19),
une seconde vanne de détente (9) étant agencée à l'intérieur d'un deuxième segment de conduit (109) qui est connecté au premier segment de conduit (100) ;
dans lequel le premier et/ou second compresseur hermétique (C1, C2) est un compresseur à vitesse variable,
dans lequel au moins l'un des premier et second compresseurs (C1, C2) peut fonctionner de manière indépendante ; et dans lequel le compresseur des premier et second compresseurs (C1, C2) qui ne fonctionne pas est contourné via un conduit de dérivation (122, 123), la pompe à chaleur comprenant en outre un troisième segment de conduit (115) couplé au condenseur (2) et comprenant une vanne (15),
la pompe à chaleur étant **caractérisée par** un quatrième segment de conduit (116) connecté par sa première extrémité au troisième segment de conduit (115) et par sa seconde extrémité à la première vanne de détente (19),
un cinquième segment de conduit (117) couplé au condenseur (2) et comprenant une vanne (17),
dans lequel la vanne (15) du troisième segment de conduit (115) est couplée optionnellement à un récepteur de liquide (11) et à un filtre déshydrateur (10) selon un agencement en série ainsi qu'à une vanne (16) dans le quatrième segment de conduit (116), dans lequel la vanne (17) du cinquième segment de conduit (117) est couplée à la sortie du filtre déshydrateur (10) et à une vanne (18) de telle sorte que le troisième segment de conduit (115) et le cinquième segment de conduit (117) sont couplés,
ladite vanne (18) étant couplée à la seconde vanne de détente (9) via le deuxième segment de conduit (109) et à une boucle de chauffage d'un bac à condensat (7) via un sixième segment de conduit (107),
dans lequel l'autre extrémité du bac à condensat (7) est couplée à une extrémité d'un économiseur (6), et l'autre extrémité de l'économiseur (6) est couplée à son tour à la vanne (16) du quatrième segment de conduit (116),
dans lequel les premier et second compresseurs (C1, C2) sont agencés de telle sorte que des niveaux d'huile nominaux des premier et second compresseurs (C1, C2) sont à la même hauteur géodésique au moins quand le système de pompe à chaleur ne fonctionne pas,
dans lequel les premier et second séparateurs d'huile (25, 26) sont connectés l'un à l'autre via un segment de conduit (124), qui comprend une vanne (24),
dans lequel la vanne (24) est fermée quand le système de pompe à chaleur fonctionne, et
dans lequel la vanne (24) est ouverte quand le système ne fonctionne pas pour une égalisation d'huile,
l'économiseur (6) étant agencé directement entre la seconde vanne de détente (9) et le premier segment de conduit (100),
dans lequel une injection de vapeur est effectuée via l'économiseur (6) dans le premier segment de conduit (100) entre les premier et second compresseurs (C1, C2),
dans lequel le fluide frigorigène de l'injection de vapeur est dévié depuis le fluide frigorigène sous-refroidi devant l'évaporateur (3) dans une direction d'écoulement et est évaporé dans un contre-écoulement par rapport à une majeure partie du fluide frigorigène dans l'économiseur (6),
dans lequel le premier et/ou le second compresseur (C1, C2) est connecté à l'unité de commande adaptée pour commander la vitesse du premier et/ou du second compresseur (C1, C2) en fonction d'une demande de performance.

2. Système de pompe à chaleur selon la revendication 1,
dans lequel la vanne (24) est une vanne magnétique ou une vanne de moteur, étant connectée à l'unité de commande.

3. Système de pompe à chaleur selon l'une quelconque des revendications 1 à 2,
dans lequel la pompe à chaleur est une pompe à chaleur à source d'air.

4. Système de pompe à chaleur selon l'une quelconque des revendications 1 à 3,
dans lequel la température d'évaporation peut être entre +10 °C et -30 °C.

5. Système de pompe à chaleur selon l'une quelconque des revendications 1 à 4,
dans lequel les premier et second compresseurs (C1, C2) peuvent fonctionner à une fréquence entre 35 et 120 Hz.

6. Système de pompe à chaleur selon l'une quelconque des revendications 1 à 5,
dans lequel, si les premier et second compresseurs (C1, C2) fonctionnent tous les deux, la vitesse des deux compresseurs (C1, C2) est commandée pour atteindre une pression optimale d'au moins un des premier et second compresseurs (C1, C2).

7. Procédé de fonctionnement d'un système de pompe à chaleur ayant des premier et second compresseurs hermétiques (C1, C2), un condenseur (2), une première vanne de détente à commande électronique (19) et un évaporateur (3), la première vanne de détente (19) étant agencée dans une direction d'écoulement devant l'évaporateur (3),
dans lequel les premier et second compresseurs hermétiques (C1, C2) sont connectés en série via un premier segment de conduit (100) pour mettre en oeuvre une compression à deux étages quand les premier et second compresseurs hermétiques (C1, C2) fonctionnent tous les deux, un premier séparateur d'huile (25) étant agencé derrière le premier compresseur hermétique (C1) et étant connecté au premier compresseur hermétique (C1) via un premier conduit d'huile (101) pour ramener l'huile du premier séparateur d'huile (25) vers le premier compresseur hermétique (C1), un second séparateur d'huile (26) étant agencé derrière le second compresseur hermétique (C2) et étant connecté au second compresseur hermétique (C2) via un second conduit d'huile (102) pour ramener l'huile du second séparateur d'huile (26) vers le second compresseur hermétique (C2), une unité de commande couplée à la première vanne de détente (19) pour commander électriquement la première vanne de détente (19), une seconde vanne de détente (9) étant agencée à l'intérieur d'un deuxième segment de conduit (109) qui est connecté au premier segment de conduit (100) ; un troisième segment de conduit (115) étant couplé au condenseur (2) et comprenant une vanne (15), un quatrième segment de conduit (116) étant connecté par sa première extrémité au troisième segment de conduit (115) et par sa seconde extrémité à la première vanne de détente (19), un cinquième segment de conduit (117) étant couplé au condenseur (2) et comprenant une vanne (17), dans lequel la vanne (15) du troisième segment de conduit (115) est couplée optionnellement à un récepteur de liquide (11) et à un filtre déshydrateur (10) selon un agencement en série ainsi qu'à une vanne (16) dans le quatrième segment de conduit (116), dans lequel la vanne (17) du cinquième segment de conduit (117) est couplée à la sortie du filtre déshydrateur (10) et à une vanne (18) de telle sorte que le troisième segment de conduit (115) et le cinquième segment de conduit (117) sont couplés, ladite vanne (18) étant couplée à la seconde vanne de détente (9) via le deuxième segment de conduit (109) et à une boucle de chauffage d'un bac à condensat (7) via un sixième segment de conduit (107), dans lequel l'autre extrémité du bac à condensat (7) est couplée à une extrémité d'un économiseur (6), et l'autre extrémité de l'économiseur (6) est couplée à son tour à la vanne (16) du quatrième segment de conduit (116), l'économiseur (6) étant agencé directement entre la seconde vanne de détente (9) et le premier segment de conduit (100),
dans lequel le premier et/ou le second compresseur hermétique (C1, C2) est un compresseur à vitesse variable,
dans lequel les premier et second compresseurs (C1, C2) sont pourvus de conduits de dérivation (122, 123) et sont connectés à l'unité de commande,
dans lequel les premier et second compresseurs (C1, C2) sont agencés de telle sorte que des niveaux d'huile nominaux des premier et second compresseurs (C1, C2) sont à la même hauteur géodésique au moins quand le système de pompe à chaleur ne fonctionne pas,
dans lequel les premier et second séparateurs d'huile (25, 26) sont connectés via un segment de conduit (124), qui comprend une vanne (24), ledit procédé comprenant les étapes suivantes :
commande de la première vanne de détente (19),
fonctionnement indépendant des premier et second compresseurs (C1, C2),
dérivation du compresseur qui ne fonctionne pas,
fermeture de la vanne (24) quand le système de pompe à chaleur fonctionne, et
ouverture de la vanne (24) quand le système ne fonctionne pas pour une séparation d'huile,
dans lequel une injection de vapeur est effectuée via l'économiseur (6) dans le premier segment de conduit (100) entre les premier et second compresseurs (C1, C2),
dans lequel le fluide frigorigène de l'injection de vapeur est dévié depuis le fluide frigorigène sous- refroidi devant l'évaporateur (3) dans une direction d'écoulement et est évaporé dans un contre-écoulement par rapport à une majeure partie du fluide frigorigène dans l'économiseur (6), commandant la vitesse du premier et/ou du second compresseur (C1, C2) en fonction d'une demande de performance.

8. Procédé de fonctionnement d'un système de pompe à chaleur selon l'une quelconque des revendications 1 à 6, comprenant l'étape de :
fonctionnement du premier et/ou du second compresseur hermétique à une fréquence de vitesse de 35 à 120 Hz, quand il est à une température d'évaporation entre +10 °C et -30 °C.
